# EUROPEAN PATENT APPLICATION

(11) **EP 3 112 148 A1**
(43) Date of publication of application: **04.01.2017**
(21) Application number: 16176572.2
(22) Date of filing: 28.06.2016
(51) Int. Cl.: B32B 7/00, B32B 7/02, B32B 7/04, B32B 7/12, B32B 7/14, B32B 21/00, B32B 21/04, B32B 21/06, B32B 21/08, B32B 29/00, B32B 29/02, B32B 1/00, B32B 3/00, B32B 3/02, B32B 3/04

(54) **PERSONAL PROTECTIVE EQUIPMENT AND MEDICAL DEVICE AND PROCEDURE FOR THEIR REALIZATION**

(30) Priority: 30.06.2015 IT UB20151806
(71) Applicant: IWOOD S.r.l., 39030 La Valle (BZ) (IT)
(72) Inventor: RIVES, Roman, 39030 La Valle (BZ) (IT)
(74) Representative: Burchielli, Riccardo

(57) **Abstract**

The present invention relates to a structure (40) personal protective equipment or medical device obtained from a grouping (1) of a first main material (2), a second main material (3), and an adhesive agent (4); the grouping (1) has first layers facing to outside in first material (2) and second layers in second material being placed between the first layers, and all the layers are coupled with each other by the adhesive agent (4). The invention relates also to the process per the assembling such structure (40), and the medical devices and/or personal protective equipment obtained from such structure (40).

## Description

The present invention relates to personal protective equipment (DPI: for example, sunglasses) and medical devices (for example, eyeglass frames) for common use, with the visible surface made up of wood and a core made up of paper. The invention relates also to the process for their realization.

In general, this kind of spectacles has a thickness and a weight relatively high in respect with the common steel and synthetic materials spectacles. The edges of such spectacles provide a great impact and make the frame very invasive.

A known problem in spectacles having the visible surface made up of wood is the insertion of the lenses, which causes in various cases the high risk of breaking the wood, the latter having a low elasticity. All the known products in the market provide a chromatically homogeneous core.

The present invention aims to overcome the drawbacks of the known art which were just claimed.

The aim of this innovation is to create a protective equipment and/or a medical device for common use with the external surface made up of wood, providing a high elasticity, a reduced thickness and very small edges; a second object is to obtain a personal protective equipment and/or a medical device which is wholly obtained from a single shaping device, so as to obtain also a product having uniform thickness and surface.

A further goal is studying a process of bonding the various layers so as to ensure on the external surface the presence of a continuous and constant grain, and at the same time to ensure a convenient and effective inclusion of the lenses.

Beyond the external surface made up in wood, this innovation has also the aim of making the choice of any chromatic sequence of a lateral portion of the frame possible, in order to highlight nuances and/or colour variations. These and other aims are achieved by the structure for a personal protective equipment or medical device according to the claim 1, by the process for assembling a structure for a personal protective equipment or medical device according to the claim 5, herewith attached, to which reference is made for the sake of brevity.

Other technical details of the mould are disclosed in the further dependent claims.

Advantageously, the structure of the invention has two external surfaces made up of a first material, for example a valuable material as the wood, and a core, made up of one or more layers made up of a second material, preferably elastic, of plant or synthetic origin, as for example paper or common use cardboard (or a material having similar properties, as for example technical textiles as the kevlar) sticked and pressed with each other.

The internal layers may have a different coloration and vary depending on the number and on the chosen sequence.

The external surfaces may comprise a layer made up of wood with a small thickness of 5/10 of a millimetre or bigger. The whole thing may be obtained from a preset mould which stretches for 33x48 cm or multiples thereof.

Advantageously, the thickness of the structure of the invention may reach a minimum of 2,8 millimetres and increase depending on the number of layers made up of second material which are placed between the two external surfaces.

Another advantage is given by the obtained weight, varying depending on the model and on the used complementary materials (for realizing lenses and hinges). The range of weight which is reached with no lenses may be of 10 - 25 grams for a complete structure.

A further advantage is given by the reached flexibility, allowing to insert, within the structure of the invention, any kind of lens.

Still according to the invention, in order to increase stability and flexibility of the complete structure, the second material may be supplemented with textile and synthetic membranes, for example ceramic fibres membranes, kevlar, carbon fibres membranes, textile fibreglass membranes, as well as all the textile products resulting from the wool, linen, cotton, hemp, silk, jute, etc.

Always according to the invention, advantageously, it is possible to obtain a structure equipped with at least one external surface which is natural and uniform, relating to linearity and warp.

Also, advantageously, the structure of the invention may house lenses made up of glass, crystal or syntetic materials such as CR39, Polycarbonate, Nylon, etc.

The structure of the invention may be used as first category DPI, if assembled as sunglasses, or as medical device, if assembled as frame for eyeglasses, by an optician or however by specialized staff.

The objects and the aforesaid advantages and others that will emerge hereinafter, will appear more evident from the description which follows, relating to a preferred embodiment of the invention, provided by way of example and not of limitation, and by the accompanying drawings, in which:
Figure 1 is an assembly diagram of the layers of the structure of the invention;
figure 2 is a cross section of the diagram of figure 1;
figure 3 shows a module of a plate usable during the process of the invention;
figure 4 shows two modules of figure 3 side by side;
figure 5 shows more modules of figure 3 assembled with each other; figure 6 shows in A a front view of the module of figure 3 and in B a side view thereof;
figure 7 shows a first element of the plate usable during the process of the invention;
figure 8 shows a plate obtained by the modules assembled with each other of figure 5 with the element of figure 7 inserted;
figure 9 shows the raw material realized according to the diagram of figure 1;
figure 10 shows the plate of figure 8 with the raw material of figure 9 inserted;
figure 11 shows a second element of the plate usable during the process of the invention;
figure 12 shows the plate of figure 10, with the second element of figure 11 inserted;
figure 13 shows third elements of the plate usable during the process of the invention;
figure 14 shows a side view of the third elements of figure 13;
figure 15 shows fourth elements of the plate usable during the process of the invention;
figure 16 shows a front view of the fourth elements of figure 15;
figure 17 shows the plate of figure 12, with the third and fourth elements of the figures 13-16 inserted;
figure 18 shows a plate in exploded view in a step of a second process according to the invention;
figure 19 shows the plate of figure 18, with a first counter mould and first coupling means inserted;
figure 20 shows the plate of figure 19, with a second counter mould and second coupling means applied;
figure 21 shows the raw material of figure 9 at exit from the plate of figure 20;
figure 22 shows the cross section of the mill usable during the process of the invention;
figure 23 shows the cross section of the raw material of figure 21 mounted on a numerical control processing machine;
the fig. 24 shows the work diagram to be followed by the numerical control processing machine;
the fig. 25 shows a first step of refining of the process of the invention;
the fig. 26 shows a second step of refining of the process of the invention;
the fig. 27 shows a third step of refining of the process of the invention;
the fig. 28 shows the structure of the invention;
the fig. 29 shows a front view of the structure of fig. 28;
the fig. 30 shows a side view of the structure of fig. 28;
the fig. 31 shows a view from top of the structure of fig. 28.

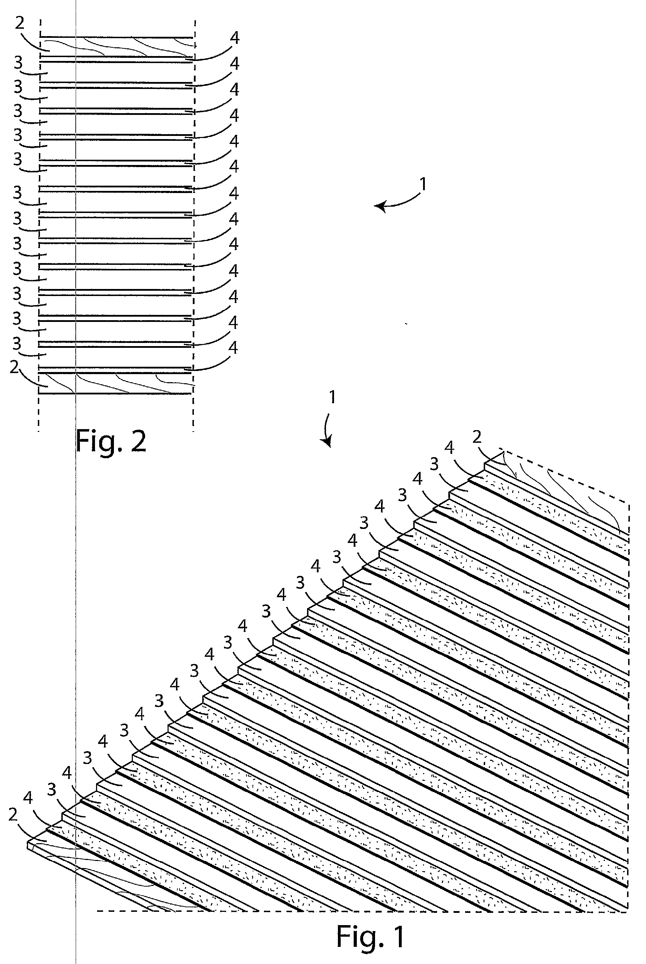

In reference with the attached figures 1 and 2, the structure for a personal protective equipment or medical device according to the invention is obtained from a grouping 1 of a first main material 2, a second main material 3, and an adhesive agent 4. In a favourite variant of the invention, the grouping 1 comprises also a stabilizing membrane (not shown).

According to the variant shown in figures 1 and 2, preferably, the first main material 2 is a material which is chosen for its aesthetical impact, as for example the wood.

Equally preferably, the second material 3 is a material which is chosen for conferring elasticity to the structure, in case the first material 2 is not enough elastic for receiving a milling suitable for housing lenses having different thickness.

For example, such material may be the paper or the cardboard.

In the latter case, relating to the length of the mould which will be used for producing the structure of the invention, the size of paper or cardboard to be used is chosen.

Considering the market and the sizes of the paper in commerce, in particular, working with a mould of 33x48 cm or a multiple thereof was chosen. As a consequence, from a common sheet of cardboard sized 70x100, 4 sheets for assembling spectacles are obtained, as a result reducing at minimum the wrods material, with the highest efficiency.

The grouping 1 assembly occurs regularly in plan putting the first layer of first material 2, applying the adhesive agent 4 with an appropriate notched trowel which allows the dosing control. Otherwise the adhesive agent 4 may be applied by a roll, brush, and spray or poured directly on the surface.

Over the first layer of adhesive agent 4 at least a layer made up of second material 3 is placed, and is in turn pressed with a static roll on the underlying surface, so as the adhesive agent 4 is uniformly distributed on the whole surface.

The last layer, also named closing layer, is constituted, as the first layer, of first material 2, and rests on a layer made up of adhesive agent 4 applied as above described.

The process of spreading the adhesive agent 4 and the following placing a further layer of second material 3, before applying the closing layer, is repeated the number of layers suitable for obtaining the desired elasticity and the thickness.

For example, an optimal grouping 1 is composed of the following layers:
- Sheet of wood
- Adhesive agent
- alternately a sheet of paper and a layer made up of adhesive agent for 12-16 times (depending on the paper grammage)
- Adhesive agent
- Sheet of wood.

In variants the number of sheets of paper may be increased or decreased. In particular, in the case of a grouping 1 comprising less than 12 sheets of paper, the following advantages are obtained: highly reduced thickness, highly reduced weight, aesthetically very elegant, reduced assembly time, reduced adhesive agent 4 consumption.

At the same time, nevertheless, the following drawbacks take place: reduction of mechanical properties, difficulties in milling the channel for the lenses, difficulties in milling the channel for the hinges.

In particular, in the case of a grouping 1 comprising more than 16 sheets of paper, the following advantages are obtained: high stability and higher mechanical properties, possibility of sealing hinge within the thickness of the structure, possibility of inserting thicker lenses preventing them from protruding from the same structure.

At the same time, nevertheless, the following disadvantages take place: difficulties in inserting into a mould, higher pressure to be exerted, difficulties in diverting the flow of the exceeding adhesive agent, increase in weight, and increase in the thickness.

In order to address the need to have, both inside and outside, the grain of the wood continuously, and on front of the frame, and on the rods, a mould was studied for allowing shaping the grouping 1, which was previously glued, in a single step.

For meeting the objectives set (thickness of the eyeglasses, weight and linearity of the grouping 1) is necessary to shape the grouping 1 with a varying pressure, so as to facilitate a constant diverting of the flow of the adhesive agent 4 within the same grouping 1.

In order to shape the grouping 1 with the desired curvature, it is possible to mainly use two kinds of shaping, which may be defined as a positive moulding or as a negative moulding.

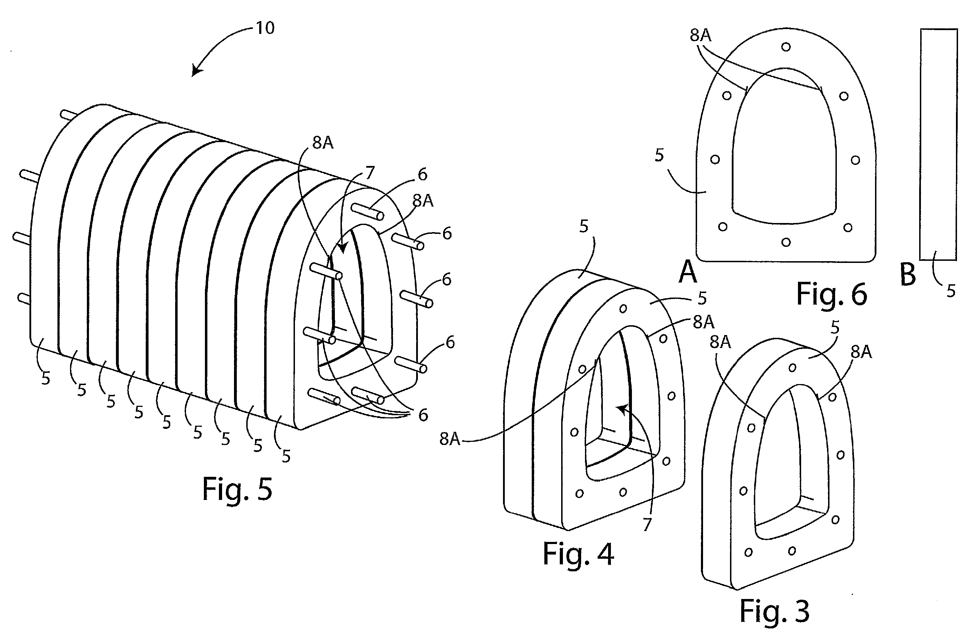

According to the invention, the negative moulding consists of the inserting the grouping 1 within a block or internally shaped mould 10. As depicted in figures 3-6, the mould 10 may be made up of more modules 5 of the chosen material, mechanically linked by linkages 6, for example threaded bars, or by appropriate adhesive agents. Since the great load resulting from the internal pressure which will be exerted on the mould 10, needed for shaping the grouping 1, realizing the mould 10 with aluminium is preferably, for its mechanical properties regarding the specific weight. The weight of the mould 10 has a considerable influence on the manoeuvrability in all the following processing.

Taking into account the stresses which the mould 10 has to withstand, it may be crafted also with another material.

If the mould is crafted in light material, and as a result softer, there is the disadvantage of the low durability of the same mould.

Otherwise, the mould may be assembled in more resistant materials, having regularly a bigger specific weight, and thus have a negative influence on the weight of the mould and on its manoeuvrability. Proportions of the internal hole 7, necessary to the shaping of grouping 1, are shown in Fig.6 and the real dimensions are directly linked to the number of layers of second material 3 used for crafting the structure.

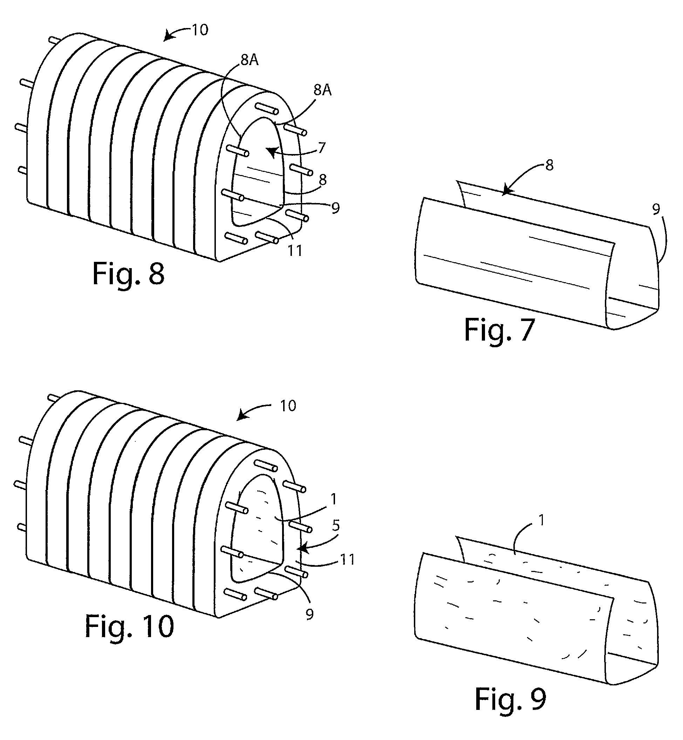

In reference with the figures 7 and 8, within the mould 10 a metal sheet 8 is inserted, having a thickness varying between 0,7-1,00 millimetres in order to make more homogeneous the surface over which the pressure will be exerted.

Relating to the adhesive properties of the adhesive agent 4, used for assembling the grouping 1 of figure 1, for example a cold adhesive, it may penetrate through the layers made up of first and second material 2,3, but may partially stick to synthetic materials as PVC, nylon, PE, latex, etc.

In a favourite variant of the invention, in these latter cases, the grouping 1 or only the first layer and the last layer of first material 2 must be externally coupled with a film in multipurpose transparent PVC, so as the adhesive agent 4 does not touch the external surfaces of first and the last layer, so as to allow the latter - after the steps of solidification - keep coupled to the internal layers of second material 3 and of adhesive agent 4 of the grouping 1, but also to allow them easily detach from the mould 10.

In order to facilitate the detach of the first and last layers of first material 2, after the solidification, the film must preferably have a thickness of about 0,15 mm. For example, advantageously a film commonly used as transparent film for covering tablecloths and/or as tablecloth may be used. Otherwise films comprising synthetic polyamide as nylon, polyethylene or latex may be used.

As depicted in figure 8, the sheet metal 8 is inserted preferably in an appropriate groove 8A, shown also in figures 6 and 7, and suitable for making it more stable, with the possibility of longitudinally deform.

The sheet metal 8 is required in case the mould is made up of more modules 5, mechanically linked with each other: in such case light discontinuities may be found in correspondence with the joints between the single modules 5.

By means of inserting the sheet metal 8, all the discontinuities of the mould are compensated.

Another factor, for which inserting the sheet metal 8 is preferably, is the protection of the mould 10 during time: the sheet metal 8, in fact, ensures that a direct touch between adhesive agent and mould 10 does not take place.

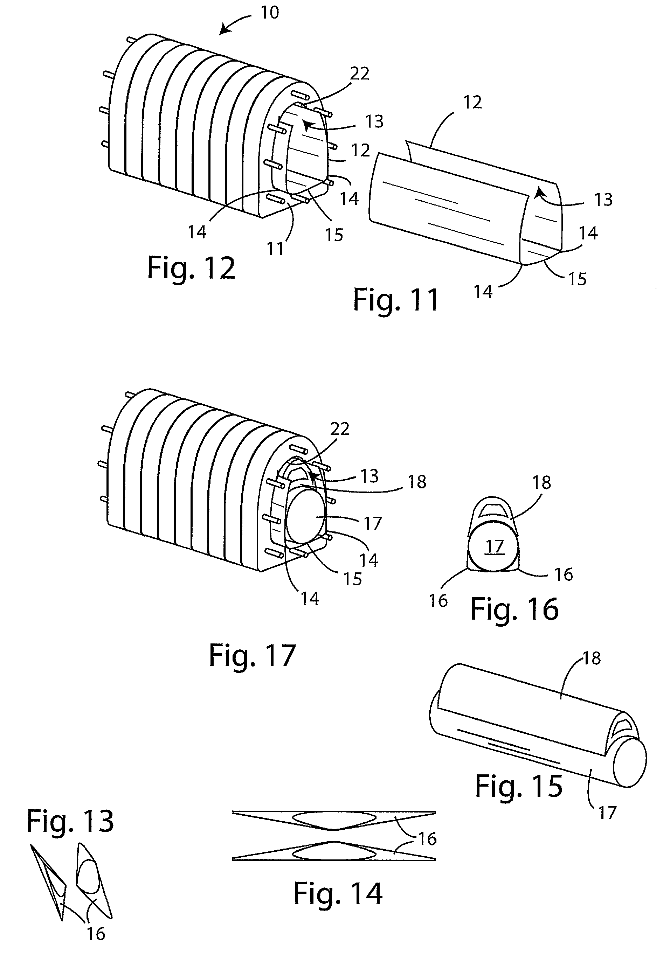

According to the process of the invention, the grouping 1 previously disclosed, preferably wrapped in a film in multipurpose transparent PVC for the detach, is inserted within the mould 10 and manually aligned with the edges 9 of the sheet metal or directly with the edges 11 of the hole 7. In reference with the figures 11-12, after the aligning of the grouping 1, the latter is stabilized with a further upper sheet metal 12 which acts also as a surface compensating element, so as to uniformly distribute the load resulting from the pressure which will be exerted during the following steps.

Preferably, the upper sheet metal 12 protrudes from the mould 10, so as the exceeding adhesive agent 3 does not touch the further elements which will be inserted during the following steps.

As the first sheet metal 8 and the grouping 1, also the upper sheet metal 12 is inserted after having been bend to substantially a U-shape, defining an open upper side 13, and two angles 14, between which there is a base 15, opposed to the open side 13.

Relating now to the figures 13-17, after inserting the upper sheet metal 12, in correspondence with the lower angles 14, two flow diverters 16 shaped as depicted in figure 13 are placed.

The flow diverters 16 may be modified depending on the layers made up of paper and on the exerted pressure, and however relating to the flow of adhesive agent to be diverted mainly along the edges of the frame.

The mould is completed by means of inserting an inflatable cushion 17, substantially cylindrical, and a stabilizing insert 18.

Otherwise an inflated pressurized cushion may suggested, with a cross section matching with the cross section of the mould 10 with a curvature such to exert pressure from the centre towards outside.

The inflatable cushion is subsequently inflated with an increasing pressure from 0 to 6 bar, for groupings 1 having 12-16 layers made up of second material 3.

For groupings 1 with a bigger or smaller number of layers made up of second material 3, the pressure to be exerted is respectively smaller or bigger than above said.

In particular, the two flow diverters 16 preferably are shaped so as to have a corner 19, suitable for substantially matching with the angles 14 of the sheet metal 12, and at least a contact area 20, suitable for matching with at least one portion of the surface 21 of the inflated cushion 17.

The stabilizing insert 18 is suitable for placing in correspondence with the open side 13, sticking to the upper part 22 of the hole 7 of the mould 10, i.e. the sole part of the hole 10 which is not covered by the sheet metals 8 and 12 and b y the grouping 1.

The inflated cushion 17 is placed between the stabilizing insert 18 and the shaped flow diverters 16.

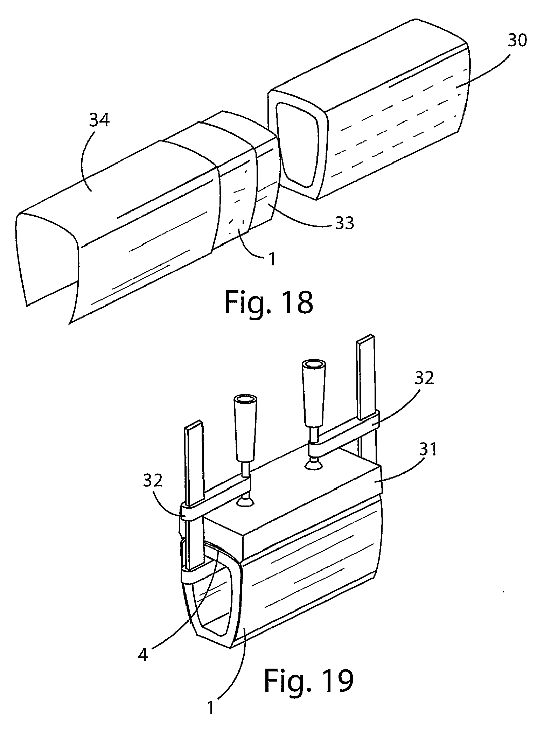

Referring now to the figures 18-20, the positive moulding consists of the external application of the grouping 1, preferably wrapped in a film in multipurpose transparent PVC for the detach, previously disclosed relating to a shaped block 30.

Pre-shaped elements 31 overlap to the grouping 1. Subsequently, the pre-shaped elements 31 may be fixed to the shaped block 30 by coupling means, for example clamps 32 or threaded bars, so as to exert on the grouping 1 an appropriate pressure (for example, the optimal pressure which may be exerted may be about 9 kg/cm²) for allowing the adhesive agent 4 penetrating within the materials 2 and 3 and the resulting exceeding adhesive agent 4 leaking.

Between the shaped block 30 and the grouping 1 a pre-shaped metal sheet 33 is inserted so as to make the surface perfectly smooth and in order to facilitate the diverting the flow of the adhesive agent.

On the external part of the grouping 1 a further pre-shaped sheet metal 34 is inserted, taking into account the thickness of the grouping 1. The shaping in this case occurs in two main steps: applying the upper pre-shaped element 31 or upper counter mould, with clamps 32 in series, so as the diverting the adhesive agent 4 flow occurs in a constant way towards the open part 35 and towards the side curve 36 of the block 30.

In particular, the closure of the clamps 32 must be in sequence from inside towards outside, in a time, preferably as follows.
First clamping: closing the central element of grouping, for example in 30 seconds and preferably exerting a pressure from 0 to about 6kg/cm², subsequently the possible waiting time may be about 30 seconds, while the closing time of the lateral elements may be around 1 minute, preferably exerting a pressure from 0 to about 6kg/cm²;
second clamping: closing the central element of grouping in 30 second preferably exerting a pressure from 6 to about 8kg/cm², subsequently the possible waiting time may be about 15 seconds, while the closing time of the lateral elements may be around 1 minute, preferably exerting a pressure from 6 to 8kg/cm².

Advantageously, in this way the adhesive agent 4 has the possibility of freely flow without creating air bubbles or adhesive agent 4 pockets, which would make the thickness of the grouping 1 varying and superficially inhomogeneous.

In order to ensure the solidification, like also the penetrating of the adhesive agent 4, the grouping 1 must stay within the mould 10 or the plate 30, under pressure for at least 12 hours, in case of the grouping above disclosed, equipped with 12-16 layers made up of second material. For groupings 1 varying from such example, the time for solidification is to be adapted proportionally to the number of layers.

After the solidification, the new material, made up of the grouping 1 shaped according to the above disclosed methods, is removed from the mould 10 or from the plate 30 and may be slightly smoothed on the surfaces made up of the first material 2. Subsequently, it is possible to remove all the residual of the adhesive agent 4, for example also mechanically, so as to obtain a homogeneous surface for the subsequent cropping of the structures.

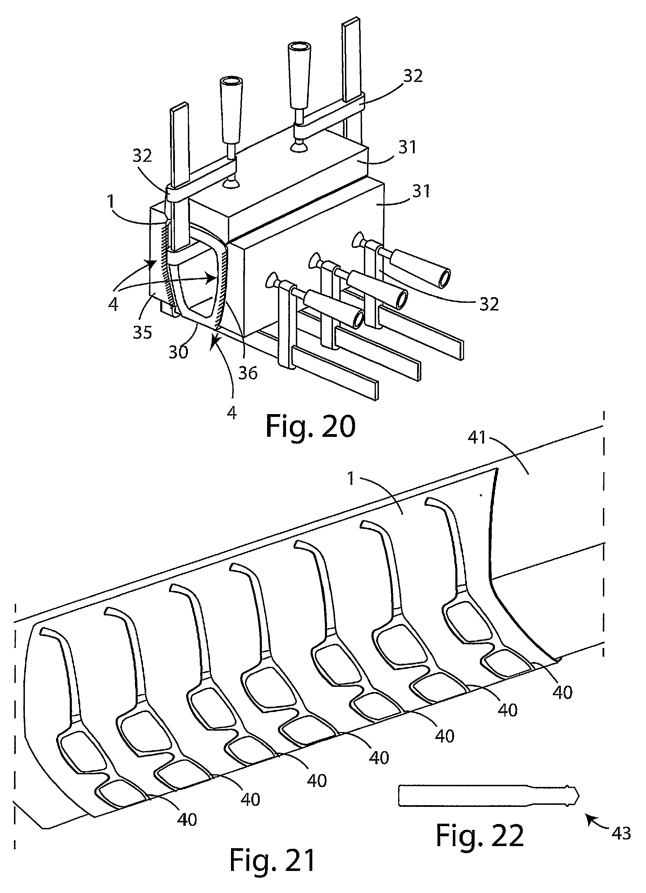

The choice of the shape in which the second material 3 is provided, for example in sheets of paper or common use cardboard, is directly linked to the number of structures of the invention which are meant to be obtained in series from the grouping 1 in the mould 10 or in the plate 30. Advantageously, referring now to the figures 21-24, producing more structures 40 from a single grouping 1, the waste is minimized, relating to the anchorage points of the grouping 1 on the support 41 for the milling, which may occur for example by a CNC 5-axis machining centre.

The grouping 1 is mechanically placed on a support 41 for the machining on a CNC 5-axis machining centre. The single structures 40 are milled performing various steps on a preset surface having the curvature of the grouping 1 previously shaped by positive or negative moulding.

The channel 42, necessary to the insertion of the lenses, is realized by means of a tapered drill 43, the profile of which is depicted in fig. 22.

For the milling of the other profiles of the structure 40, machining along the chosen outline for the same structure 40 is enough, varying in the light of the size of the wearer, besides for aesthetic reasons, creating in the grouping 1 a first channel 45 corresponding to the same outline of the structure, and a second channel 46 for separating a front support 47 for lenses from the rods 48. In order to advantageously optimise the milling process, providing more than one structure 40 on a shape 44 is possible, so as to operate a single milling program and so as to minimize the time for work completed by the machine.

In particular, providing the milling of 3-8 structures 40 from a single grouping 1 is preferably, varying the number of structures in the light of the chosen outline, on the kind of used machine (i.e. in the light of the maximum weight which is manoeuvrable by such machine) and of the size of the grouping 1.

The use of configured settings is such to let some points free, so as the components 47 and 48 of the structure 40 (front support 47 for lenses and rods 48) may be removed, preferably manually as soon as the milling of the whole mould is completed.

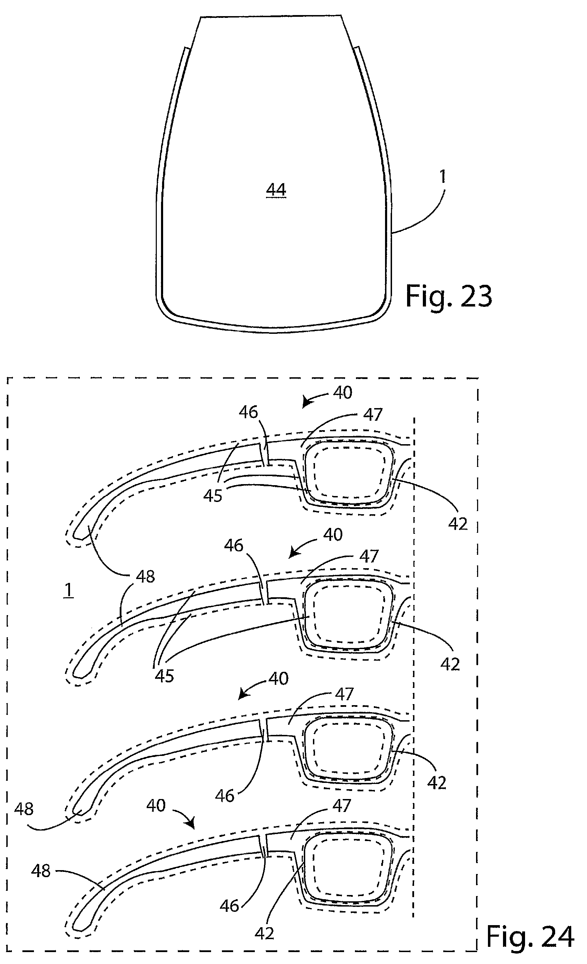

The cut which is depicted in fig. 24 may be advantageously set with varying depths, so as one or more points within the channel 45 may be present, for example four points, by which the structure 40 is still connected with the grouping 1. In particular, such configuration may occur both for the front support 47, and for the rods 48: the channel 45 would be partially interrupted in one or more points so as the rods 48 and/or the front support 47 stand fixed to the grouping 1.

In detail, such points may be facilitated detach points, however having thickness lower than the total thickness of the grouping 1, so as the structure 40 or its single components may easily detach from the grouping 1, for example also manually.

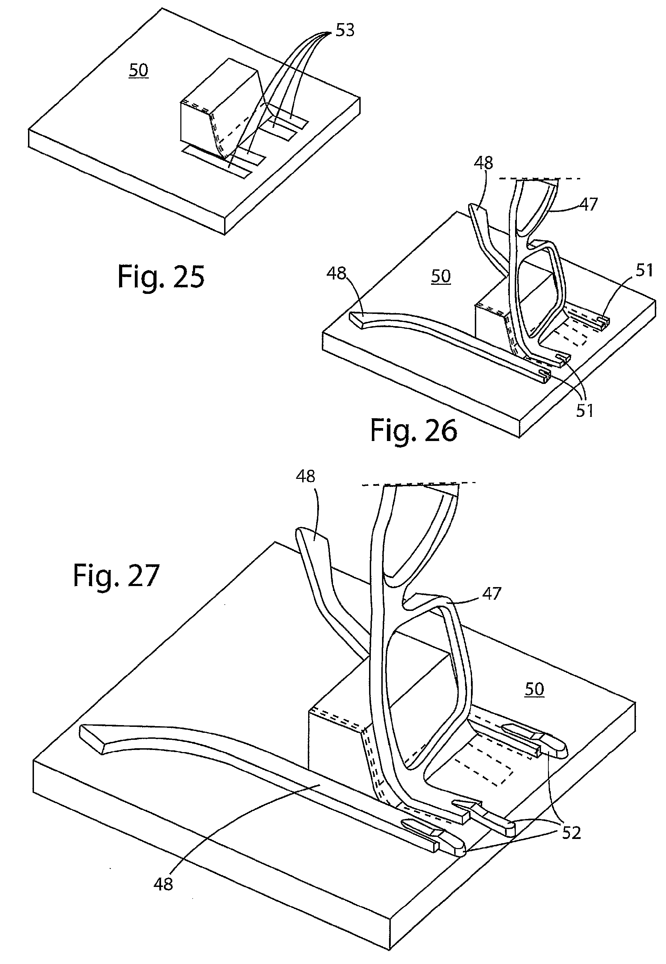

Subsequently to the step of milling, the components of the structure 40, i.e. the rods 48 and the front support 47 for lenses, are subsequently cleaned and machined, preferably by hand, so as to obtain homogeneous elements for the subsequent step of milling the housing for the hinges. Referring now to the figures 25-27, an appropriate drilling template 50 allows the subsequent milling of the housings 51 for the hinges 52. By appropriate channels 53 for placing the components, provided on the drilling template 50, the rods 48 and the front support 47 are inserted in line with the axis of the mill, which moves forward aligned with the single pieces.

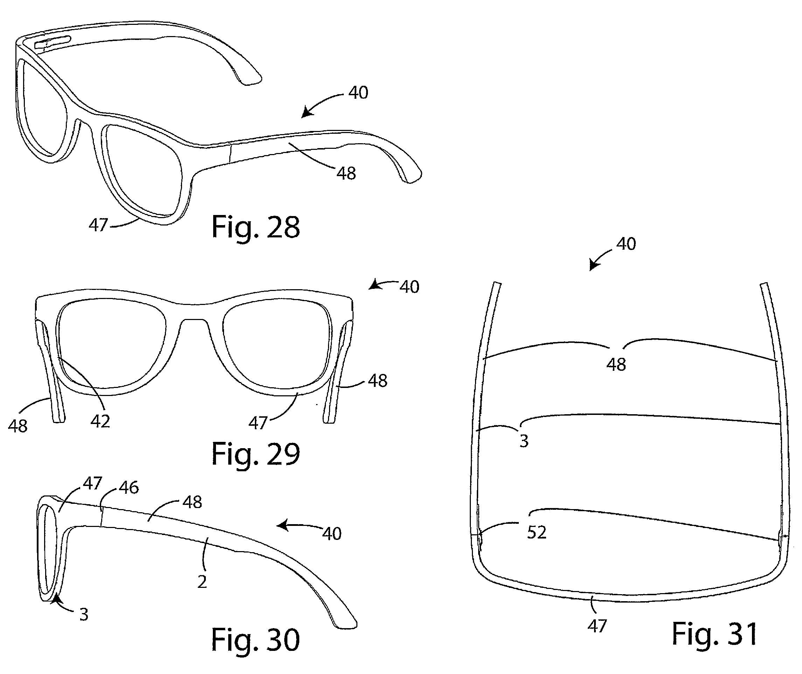

Once the milling is completed, the hinges 52 may be inserted into the housings 51 with no use of means of permanent fixing, so as to advantageously uncouple the elements for a possible laser engraving or another finishing treatment. For example, the hinges may be fixed by a chemical fixation agent only subsequent to the engraving process. Referring now to the figures 28-31, according to the invention, all the writings, logos and signs, for which the aim could be to be applied to the structure 40, may be laser engraved by means of appropriate drilling templates (not shown).

Equally preferably, subsequent to the possible laser engraving, the rods 48 and the front support 47 are assembled with each other. If the first material 2 used requires it, the surfaces may be smoothed and cleaned having the hinges 52 inserted, so as possible discontinuities due to the insertion of the same hinges 52 may be advantageously smoothed. Smoothing the edges of the structure 40 is possible, with different angles, so as to highlight or minimise the visibility of the second material 3 in respect with the first material 2, in order to advantageously show the uniqueness and peculiarity of the grouping 1 which was created. Subsequent to the smoothing of the components 47 and 48, and to their personalization, it is possible to permanently fix the hinges by the use of an adhesive agent.

Once the smoothing is completed, the structure 40 may be cleaned by compressed air, and possibly treated with a mordant supplemented by a vegetable or synthetic oil.

According to the invention, applying additional nasal supports (not shown) is possible, by means of bonding or using other fixing means.

From the above description the technical characteristics of the personal protective equipment, the medical device and the process for their realization, which are object of the present invention, are clear, as well as their advantages.

It is clear, finally, that numerous other variants may be made to the devices and to the procedure in question, without for this departing from the novelty principles inherent in the inventive idea, as well as it is clear that, in the practical embodiment of the invention, the materials, the shapes and the sizes of the illustrated details can be whatever, depending upon the requirements, and may further be replaced with other technically equivalent.

## Claims

1. Structure for a personal protective equipment or medical device comprising a grouping (1) of a first main material (2), a second main material (3), and an adhesive agent (4), the grouping (1) comprising two first layers made up of the first main material (2), two second layers made up of the adhesive agent (4), and a third layer made up of the second main material (3), the first layers facing to outside and the second layers being placed between the first layers and the third layer.

2. Structure according to the claim 1, **characterized in that** the second main material (3) comprises one or more sheets alternating with the adhesive agent (4).

3. Structure according to the claim 2, **characterized in that** the sheets are made up of paper.

4. Structure according to the claim 2 or 3, **characterized in that** the second main material (3) comprises from 12 to 16 sheets of paper alternating with adhesive agent (4).

5. Structure according to one of the claims 1-4, **characterized in that** the first main material (2) comprises wood.

6. Process for assembling a structure for a personal protective equipment or medical device according to one of the claims from 1 to 5, **characterized in** providing the following steps:
- placing the grouping (1) onto a shaped mould (10, 30)
- placing onto the mould (10, 30) pre-shaped elements (12, 16, 31)
- placing, over the pre-shaped elements (12, 16, 31), pressing elements (17, 18, 32) having cross-section and shape corresponding to the cross section and shape of the mould (10, 30) so as to exert a pressure from the grouping (1) towards the mould (10, 30)
- solidification of the grouping (1)
- removing the grouping (1) from the mould (10, 30).

7. Process according to the claim 6, **characterized in** providing, before the step of placing the grouping (1) onto the shaped mould (10, 30), the following steps:
- bending a first sheet metal (8) to substantially a U-shape, defining an upper open side (13), and two lower angles (14), between which there is a base (15), opposed to the open side (13)
- placing the first sheet metal (8) onto the mould (10, 30).

8. Process according to the claim 6 or 7, **characterized in** providing, after the step of placing the grouping (1) onto the shaped mould (10, 30), the following step:
- aligning the grouping (1) with the edges (11) of the mould (10, 30).

9. Process according to one of the claims 7 or 8, **characterized in** providing, after the step of placing the grouping (1) onto the shaped mould (10, 30), the following step:
- aligning the grouping (1) with the edges (9) of the first sheet metal (8).

10. Process according to one of the claims 6-9, **characterized in that** the step of placing pre-shaped elements (12, 16, 31) onto the mould (10, 30) comprises the following steps:
- bending a second sheet metal (12) to substantially a U-shape, defining an upper open side (13), and two lower angles (14), between which there is a base (15), opposed to the open side (13)
- placing the second sheet metal (12) onto the mould (10, 30).

11. Process according to the claim 10, **characterized in that**, after the step of placing the second sheet metal (12) onto the mould (10, 30), the following step occurs:
- placing, in correspondence of the lower angles (14), two flow diverters (16).
